# EUROPEAN PATENT APPLICATION

(11) **EP 4 650 156 A1**
(43) Date of publication of application: **19.11.2025**
(21) Application number: 24176699.7
(22) Date of filing: 17.05.2024
(51) Int. Cl.: B29C 70/00, C22C 49/02, B29C 65/70, C08J 5/24, B29C 65/00

(54) **FIBRE COMPOSITE MATERIAL, A METHOD OF MANUFACTURING A FIBRE COMPOSITE MA-TERIAL, A COMPONENT CONSISTING OF OR COMPRISING A FIBRE COMPOSITE MATERIAL AND A TANK STRUCTURE**

(71) Applicant: Airbus S.A.S., 31700 Blagnac (FR)
(72) Inventor: Bautz, Brian, 82024 Taufkirchen (DE); Beier, Uwe, 82024 Taufkirchen (DE); Hübner, Fabian, 82024 Taufkirchen (DE); Meer, Thomas, 82024 Taufkirchen (DE); Geistbeck, Matthias, 82024 Taufkirchen (DE)
(74) Representative: Isarpatent

(57) **Abstract**

The present invention provides a fibre composite material (10) with at least one fibre layer (12) comprising a metal component having a low melting temperature, high ductility and high density, wherein the fibre layer (12) comprises fibres (13) impregnated with the metal component or having a coating comprising the metal component, a method of manufacturing a fibre composite material (10), a component consisting of or comprising the fibre composite material (10) and a tank structure (30) provided with the component.

## Description

The present invention pertains to a fibre composite material, a method of manufacturing a fibre composite material, a component consisting of or comprising a fibre composite material and a tank structure.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft.

Hydrogen propelled aircraft are a key technology for zero emission aviation that requires technological adaptations in the systems employed in such aircraft. One of these systems is the energy storage system or tank. State of the art liquid H2 (LH2) storage systems are metal, e.g. aluminium based. Light weight structures, in particular carbon fibre reinforced plastics (CFRP) tanks are favoured over metal, e.g. aluminium tanks for enhanced performance and tank weight to storage ratio in cryogenic environments required to store liquid hydrogen (LH2), since hydrogen must be stored liquid at -253°C to achieve viable volumetric energy densities in particular in an aircraft. CFRP can strongly reduce the weight of LH2 tank systems. To ensure tightness of the tank and suppress outgassing of the CFRP, common approaches use liners applied on the inside of the tank wall. Current liner technologies are not only heavy, but due to different CTEs prone to delaminate. Some approaches aim at metalized CFRP on the surface or at least partly penetrating the fibre structure of the composites. However, the used metals e.g. copper can have a mismatch in the coefficient of thermal expansion (CTE), adhesion and missing ductility at cryogenic temperatures.

Against this background, it is an object of the present invention to find a fibre composite material and that enables manufacturing of high-quality fibre reinforced plastics components and to ensure high performance in structures using these materials.

This object is achieved by a fibre composite material having the features of claim 1, a method of manufacturing a fibre composite material having the features of claim 6, a component consisting of or comprising a fibre composite material having the features of claim 9 and a tank structure having the features of claim 10.

According to a first aspect of the invention, a fibre composite material with at least one fibre layer comprising a metal component having a low melting temperature, high ductility and high density, wherein the fibre layer comprises fibres impregnated with the metal component or having a coating comprising the metal component. The fibre composite material, being preferably a carbon fibre reinforced plastic (CFRP)-Metal-Multifunctional composite hybrid, has the advantage that it is mechanically interlocking both the metal component and the fibres via the fibres. In consequence the function, in particular, but not limiting the invention thereto, when employing the composite material in tank structures as liner or sealant is brought by the material and does not have to be incorporated in an extra step during manufacturing. The CTE mismatch of the metal component and the fibre reinforced plastic, in particular CFRP, is mitigated by the ductility of the metal component, also at cryogenic temperatures. The fibre composite material can likewise be used to provide tapes for automated fibre placement and can be configured as woven or non-crimp fibre fabric, without limiting the invention thereto.

A further aspect of the invention lies in a method of manufacturing a fibre composite material wherein at least one fibre layer is provided that is impregnated or coated at least partially with the metal component and impregnated at least partially with a polymeric resin matrix. This has the advantage that a fibre composite material can be provided that is configured as a fibre-metal-hybrid wherein a mechanically interlocking of both the metal component and the fibres is established via the fibres.

A further aspect of the invention lies in a component consisting of or comprising a fibre composite material of the invention. This has the advantage that the component is provided as a fibre-metal-hybrid component that has various uses, in particular but not limited to the manufacture of tank structures, such as LH2 tanks in an aircraft.

A further aspect of the invention lies in a tank structure manufactured from fibre reinforced plastic, in particular carbon fibre reinforced plastic (CFRP), provided with a component according to the invention. Such tank structure, in particular when containing a liquid, preferably a liquid stored under cryogenic conditions such as liquid hydrogen (LH2), has the advantage that weight can be further reduced, tightness of the tank be increased and outgassing of the fibre reinforced plastic, in particular CFRP be suppressed. Furthermore, sealing of critical regions of the tank structure can be significantly improved and crack propagation be limited.

Advantageous embodiments and further developments are apparent from the further dependent claims and from the description with reference to the figures.

According to an embodiment of the invention, the metal component is one of indium and metal alloy comprising indium. This benefits from the advantages of indium being a metallic element having a variety of unique properties, such as corrosion resistance, low melting temperature, making it one of the few metals that become liquid at relatively low temperatures, ductility which provides advantages when moulding, stretched and machining the metal and particular advantages in sealing applications or when applying thin layers or coatings of metal in structures and components as described in more detail in connection with the present invention. Metal alloys comprising indium can likewise be employed in the invention fibre composite material, such alloys are produced by mixing indium with other metals to customise or improve the properties of indium for specific applications. Some of the most common indium alloys that can be employed in the present inventions without limiting the invention thereto can be indium-tin alloys containing a mixture of indium and tin that offer a low melting temperature and good adhesion properties on various surfaces, indium-gallium alloys containing a mixture of indium and gallium that can be used in applications that require a low melting temperature, indium-zinc alloys contain a mixture of indium and zinc that can be used in various applications, including solder alloys, seals and coatings, indium-lead alloys contain a mixture of indium and lead that can be used in various applications, including solder alloys, protective coatings and gaskets. The aforementioned alloys containing indium are described by means of example only and are not limiting the invention thereto. There are many other possible combinations of indium with other metals that can be employed depending on the specific requirements of the application. The properties and applications of an indium alloy depend on the composition of the alloy and the desired properties, such as melting temperature, strength, ductility, and corrosion resistance.

According to an embodiment of the invention the fibres used in the fibre composite material are reinforcing fibres, in particular carbon fibres. This has the advantage that the invention fibre composite can be manufactured with a high weight / strength ratio and be employed in a big variety of applications. The reinforcing fibres, in particular carbon fibres can be embedded in a thermosetting matrix consisting of an uncured thermosetting polymer consisting of a mixture of resins and curing agents and optional additives. This enhances overall structural quality of the fibre composite material and allows for adaptation to the field of application of the fibre composite material and components produced therewith. In particular unidirectional pre-impregnated dry fibres can be used. This has the advantage that the fibre composite material and components manufactured therefrom can be further prevented from cracking in particular in cryogenic environments or environments which require extended load carrying capacities and that are susceptible to crack formation and crack propagation.

According to a further embodiment of the invention the at least one fibre layer comprising the metal component is bonded or joint to at least one layer comprising fibre reinforced plastic, in particular carbon fibre reinforced plastic (CFRP) in a layered configuration. This has the advantage that a fibre composite material can be provided, that is configured as a fibre-metal-hybrid wherein a mechanically interlocking of both the metal component and the fibres is established via the fibres. Furthermore, and also encompassed by the invention, the metal or metal alloy, in particular indium can be used to subsequently fill gaps or defects such as holes or cracks in a fibre layer, thus providing a repair option for manufactured structures.

The metal or metal alloy, in particular indium, can be provided as a patch or repair compound and applied to the gap or defect of the structure., i.e. limited or directed to regions where the specific properties of the hybrid material are required. Due to the nature of the metal or metal alloy, in particular indium, the metal can fill the gap or defect on or after applying pressure or heat or a combination thereof or by application of a metal layer by spreading, spraying or brushing the metal, thereby interlocking with the fibres.

According to a further embodiment of the invention, the at least one fibre layer has at least one first and one second region, with the first region comprising fibres impregnated or coated with the metal or metal alloy and the second regions comprising fibres impregnated with a polymeric resin matrix. This has the advantage that a fibre composite material can be provided that is configured as a fibre-metal-hybrid wherein a mechanically interlocking of both the metal component and the fibres is established via the fibres is limited or directed to regions of the material where the specific properties of the hybrid material are required. The manufacture of multi-layer material is also encompassed. Likewise, and also encompassed by the invention, the metal or metal alloy, in particular indium can be used to subsequently fill gaps or defects such as holes or cracks in a fibre layer, thus also providing a repair option for existing fibre structures. The metal or metal alloy, in particular indium, can be provided as a patch or repair compound and applied to the gap or defect of the structure., i.e. limited or directed to regions where the specific properties of the hybrid material are required. Due to the nature of the metal or metal alloy, in particular indium, the metal can fill the gap or defect on or after applying pressure or heat or a combination thereof or by application of a metal layer by spreading, spraying or brushing the metal, thereby interlocking with the fibres.

According to a further embodiment of the invention method, the impregnation with the polymeric resin matrix is carried out before, during or after the impregnation with the metal component. This has the advantage that materials can be provided that have configurations required in specific applications and that can be modified by applying the metal component before, i.e. prior to curing the matrix material, during i.e. by co-curing the metal containing and the non-metal containing matrix or after, i.e. post curing the matrix material, manufacturing is completed.

According to a further embodiment of the invention method, the at least one fibre layer is configured as a dry fibre semi-finished product, such as a dry fibre fabric, having a first surface and a second surface arranged opposite of the first surface and wherein impregnating or coating the dry fibre semi-finished product at least partially with the metal component and impregnating the fibre layer at least partially with a polymeric resin matrix is carried out on one of the first surface, the second surface and both surfaces. This has the advantage that the fibre composite material can be provided with uniform configuration in the fibre matrix that can be modified in the methods described herein and with respect to the specific requirements of the later use of the material.

According to an embodiment of the invention tank structure, the component is configured as a sealing element provided in or adjacent to joints provided in the tank structure. This has the advantage that only critical regions of the tank structure can be provided with the invention fibre composite material whereas in other regions standard materials can be used. The use of the invention fibre composite material can be limited to these regions.

According to a further embodiment of the invention tank structure, the component is configured as a liner provided preferably on an outer or inner surface or surface region of the tank structure or on both surfaces or surface regions. It is an advantage of this embodiment, that when employing the fibre composite material in tank structures as liner or sealant on the outer and/or inner surface, the function of ensuring tightness of the tank and suppression of outgassing of the fibre reinforced plastic, in particular CFRP is brought by the fibre composite material of the invention itself and does not have to be incorporated in an extra step during manufacturing. The CTE mismatch of the metal component, in particular indium or an indium alloy and the fibre portion, in particular CFRP, is mitigated by the ductility of the metal component in particular being indium or an indium alloy, also at cryogenic temperatures.

According to a further embodiment the tank structure has a two-part configuration with a first part configured as a dome part comprising a longitudinally protruding skirt portion and a second part configured as a cylinder, with the first and the second part at least partially overlapping in the skirt portion and wherein the first part is secured to the second part by a bolt or rivet passing through the skirt portion. In the foregoing the invention is described mainly with embodiments using a bolt or bolting technologies without limiting the invention thereto. The invention also encompasses any suitable form or force fit connection elements, such as rivets or screws, that are obvious to the skilled person. The invention tank structure has the advantage that bolting technologies can be used, while no perforation of the tank shell has to be made. The position of the bolt can be shifted into the skirt portion, where it does not increase tightness risks during normal operations. In case of unforeseen adhesive failure, crack may propagate to a second load path i.e. to the bolt, and may induce gradual increasing leakage, but no fatal failure. When employing the invention fibre composite material in the bolt region, sealing of a bolt passage can be provided due to the properties of the invention material. The tank structure as described above is not limited to embodiments having a liner or sealing using the invention fibre composite material but can likewise be employed without or with standard liner or sealing materials known in the art thereby achieving the above advantages of the invention tank structure. The above configuration also encompasses a tank structure wherein the skirt portion and the first tank part are manufactured and cured jointly to achieve a uniform structure in this tank part. The two-part configuration of the tank structure and final tank will provide additional advantages with respect to improved accessibility of the bolt being provided in the skirt portion.

Furthermore, the two-part configuration provides advantages in tolerancing adhesive bonding or welding or wet to cured part bonding and hence increases manufacturing efficiency and improves overall tank quality.

Overlapping of the first and second tank part and securing the overlap by bolt provides additional advantages such as providing a second load path in the tank structure via the bolt without perforating the tank shell due to the bolt passage being positioned in the skirt portion. The configuration also ensures accessibility of the bolt and bolt passage from two sides at the skirt and of an area of the bonding the first and second part of the tank in the skirt portion. It also enables thermoplastic welding and controlled force distribution between the first part (dome part) and the second part (cylindric part) of the tank structure in particular in the skirt portion. Bolts used in the manufacture of the tank structure can preferably consist of titan, Invar or CFRP, whereas ceramics, aluminium and steel can be likewise employed as well as mixtures thereof, without limiting the invention thereto. Bolts can be embedded with additional stealing adhesive, or in the case of employing thermoplastic joining heated to weld-bond with a thermoplastic skirt portion and second, cylindric part of the tank structure. Inserting and passing the bolts under an angle with respect to the tank structure, in particular into the overlap of the skirt portion and the second part of the tank structure is also encompassed. Regarding the joining of the first and second part of the tank structure a bond line can be formed in particular in the overlap between the skirt portion and the second part that can be established using standard adhesives known in the art. As an alternative and depending on the materials used, standard thermoplastic welding can be applied. To allow for more efficiency in assembling the first and second art, the overlapping edge regions can be provided with an angled geometry to facilitate pre-assembly and forming the overlap. As an alternative thereto or as an optional or additional feature, the first and second part can be provided flexible at least within the overlapping regions by providing cuts in the skirt portion and/or the second part, i.e. the cylindrical part of the tank structure.

According to a further embodiment the invention tank structure, the skirt portion comprises, at least in the area of the bolt passage, one of a fibre composite material of the invention or a component manufactured therefrom such as in particular a sealing element or a washer. It is an advantage that the fibres in the composite material or component manufactured therefrom provide enhanced stability and ensure stable positioning of the metal component within the material or component even if pressure is applied thereon. The metal component, in particular indium, may flow within the material or component and enhance sealing and tightening properties due to its ductility, even under cryogenic conditions.

According to a further embodiment the tank structure is configured as a liquid hydrogen (LH2) tank, in particular in an aircraft. Moreover, the tank structure can be manufactured from carbon fibre reinforced plastic (CFRP). It is an advantage that the invention fibre composite material, can be used to secure global tightness of LH2 tank systems in particular of CFRP tanks. It is a further advantage that the material or components manufactured therefrom can be used to locally seal joining of two or more tank parts. Using indium as a metal component provides the further advantage that the metal component is deformable at room temperature as well as at cryogenic temperature which is of particular relevance during manufacturing and while using the tank structure. Moreover, the metal component, in particular indium has unique wetting properties. Using the invention fibre composite material also overcomes CTE mismatch and missing ductility at cryogenic temperatures and ensures reliable tightness of LH2 tanks.

The invention will be explained in greater detail with reference to exemplary embodiments depicted in the drawings as appended.
- Fig. 1: schematically depicts the method of manufacturing the fibre composite material according to an embodiment of the invention;
- Fig. 2: schematically depicts the method of manufacturing the fibre composite material according to a further embodiment of the invention;
- Fig. 3a-c: schematically depict uses of embodiments of the fibre composite material of the invention; and
- Fig. 4a, b: schematically depict another use of an embodiment of the fibre composite material of the invention;
- Fig. 5: schematically depicts a section of a tank structure according to an embodiment of the invention;
- Fig. 6: schematically depicts a section of a tank structure according to a further embodiment of the invention;
- Fig. 7: schematically depict sections of a tank structure according to a further embodiment of the invention; and
- Fig 8: schematically depicts a section of a tank structure according to a further embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

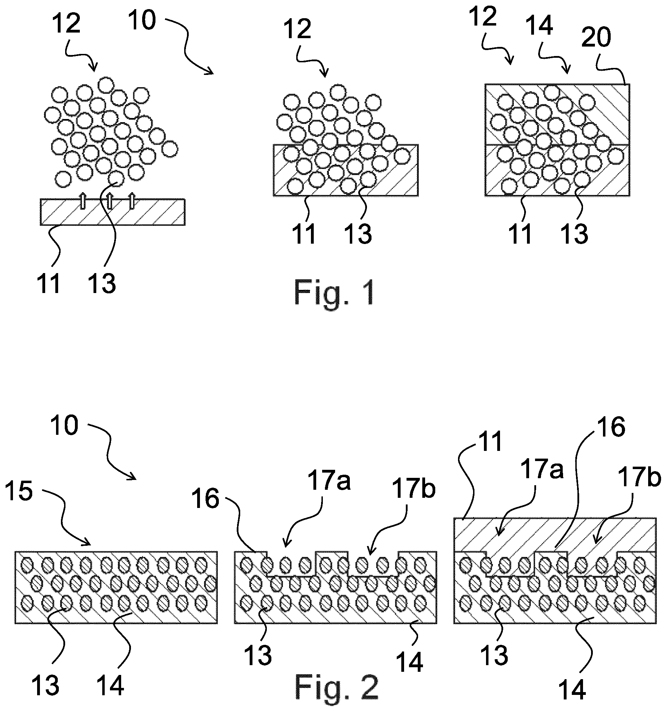

Fig. 1 schematically depicts the method of manufacturing the fibre composite material 10 according to an embodiment of the invention. Therein the metal component of the fibre composite material 10 is provided as a solid indium film 11 that is pressed into a fibre layer 12 comprising reinforcing fibres 13, in particular carbon fibres. The indium film 11 thus impregnates the fibres 13 in a part or section of the fibre layer 12. After the impregnation is completed, the fibre layer 12 is impregnated with a polymeric resin matrix 14 to complete the fibre composite material 10. Due to the low melting temperature providing enhanced ductility of indium, impregnation can be established by using indium as a solid material that does not require melting to impregnate the fibres 13. Pressing the fibres 13 or fibre layer 12 in the solid indium film 11 is sufficient to achieve impregnation since indium can intercalate between the fibres 13 of the fibre layer 12. After impregnation with the polymeric resin matrix 14, the fibre composite material 10 can be cured in standard processes.

As an alternative, the indium film 11 can be pressed into a resin pre-impregnated fibre fabric, thereby squeezing out partly the resin 20. As an additional alternative, a prepreg material can be combined with dry fabric that is not impregnated with a resin or embedded in a resin matrix and cured together with the prepreg material. The non-impregnated fabric is than impregnated or infused with molten indium to impregnate the fibres 13 of the dry fabric. The fibre composite material 10 can be used to provide tapes for automated fibre placement and be configured as woven or non-crimp fibre fabric, without limiting the invention thereto.

Fig. 2 schematically depicts the method of manufacturing the fibre composite material 10 according to another embodiment of the invention. Therein fibres 13 are embedded in a thermosetting matrix 14 consisting of an uncured thermosetting polymer comprising a mixture of resins and curing agents, optional additives and cured to form a carbon fibre reinforced pre-preg (CFRP) material 15. The fibres 13 of the top layer 16 of the material 15 are partially exposed in distinct regions 17a, b of the material 15. The exposure can be done by UV-laser or specific plasma processes for example but without limiting the invention thereto. After curing and exposure an indium film 11, providing the metal component of the invention fibre composite material 10, is pressed on the cured CFRP material 15 to impregnate the exposed fibres 13. The indium film 11 pressed on the cured CFRP material 15 flows into the distinct regions 17a, b and coats the top layer 16 with an indium film 11.

Besides providing indium as an indium film 11 as described in connection with fig-ures 1 and 2, indium can also be applied in a molten state or attached to the fibres 13 by gas or particles deposition. Furthermore, after the indium film 11 is pressed on the fibres 13 the film can be molten to close any remaining gaps or imperfections in the indium impregnated fibre layer.

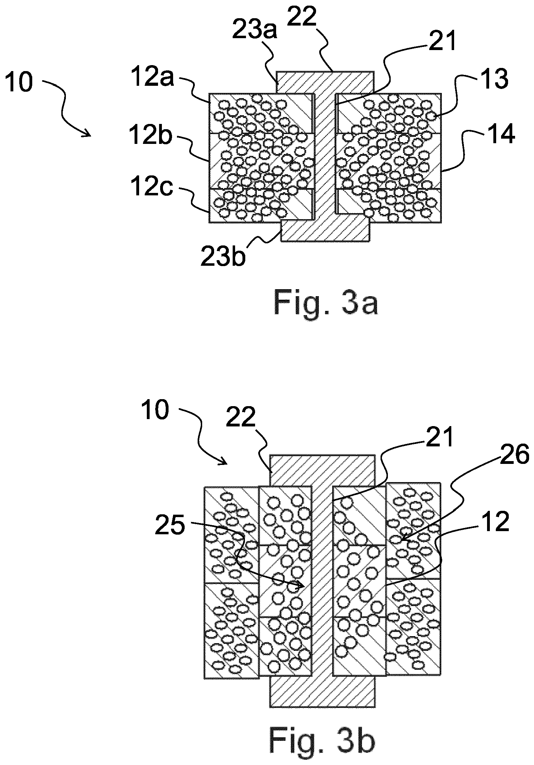

Fig. 3a to c schematically depict uses of an embodiments of the fibre composite material 10 of the invention. The material 10 herein contributes to sealing concepts and is described by way of a non-limiting example where the material 10 forms part of a bolt passage 21 of a bolt 22 passing through a structure comprising or consisting of a fibre containing material. In the embodiment of Fig. 3a the material is configured as a three-layered fibre composite material 10 comprises two outer layers 12a, c each comprising fibres 13 impregnated with a metal component, in particular indium, that is in particular applied in one of the methods as described above. The inner or middle layer 12b is formed by fibres 13 embedded in a resin matrix 14. Due to the properties conferred to the outer layers 12a, c by the indium impregnation, the sealing of the bolt passage 21 is ensured. Since the indium in the fibre layers 12a, c is ductile, it allows the bolt heads 23a, b to be partially recessed into the fibre layers 12a, c and to then seal the bolt passage 21 by means of the fibre layers 12a, c. The fibres 13 in the fibre layers 12a, c containing the indium on the other hand prevent the indium from being pressed out of the fibre layers 12a, c while the bolt 22 is installed and thus ensure the dimensional stability of the sealing structure.

Fig. 3b depicts an alternative sealing concept for the bolt passage 21. Therein the indium impregnated fibre layer 12 is only provided in the region of the bolt shaft 24 thereby sealing the inner region 25 of the bolt passage 21. In this embodiment, the fibre composite material 10 of the invention is used to provide or manufacture a seal or sealing element 26 that is introduced in a bolt passage 21, only. The bolt passage 21 is surrounded by a material that does not contain indium or any other ductile metal component.

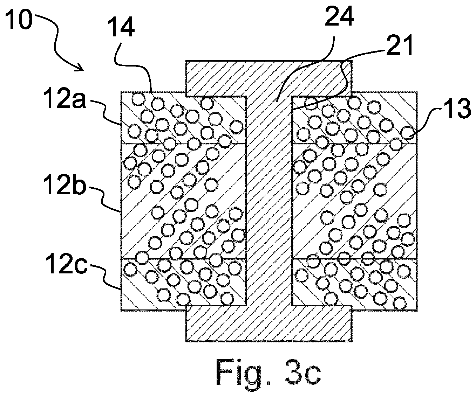

Fig. 3c depicts another embodiment of a sealing concept, wherein the fibre composite material 10 of the invention is used as a liner, in particular a liner for an inner surface 38 of a tank structure 30 as described in more detail below. The material herein is also configured as a three-layered fibre composite material 10 comprises two outer layers 12a, c each comprising fibres 13 embedded in a resin matrix 14. The inner or middle layer 12b is formed by fibres 13 impregnated with a metal component, in particular indium. The middle layer 12b is joint to the outer layers 12a, c in particular in one of the methods described before. Due to the properties conferred to the inner layers 12b by the indium impregnation, the sealing of the bolt passage 21 in the area of the bolt shaft 24 is ensured. Since the indium in the inner layer 12b is ductile, it allows the bolt shaft 24 to be provided with a sealing and to thus seals the bolt passage 21 by means of the inner layer 12b.

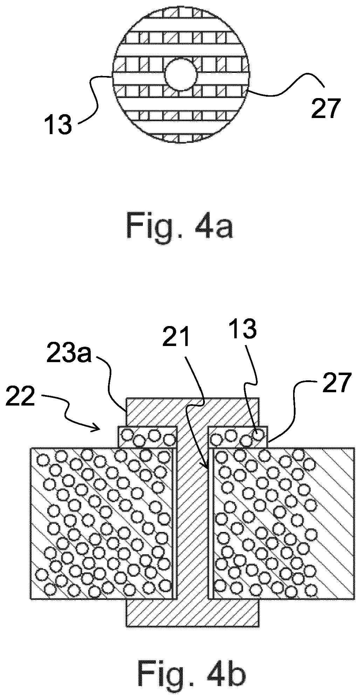

Fig. 4a and b schematically depict uses of embodiments of the fibre composite material 10 of the invention. Fig. 4a depicts a prefabricated washer 27 comprising reinforcing fibres 13 impregnated with indium. As shown in Fig. 4b the washer 27 is placed under a bolt head 23a on a bolt passage 21 in a CFRP structure prior to inserting and securing the bolt 22. The reinforcing fibres 13 in the washer 27 prevent the indium from being squeezed out of the washer 27 while the bolt 22 is screwed in or secured whereas the indium on the other hand seals the bolt passage 21 and closes any remaining gaps or imperfections in the CFRP structure surrounding the bolt passage 21 that is not impregnated with indium.

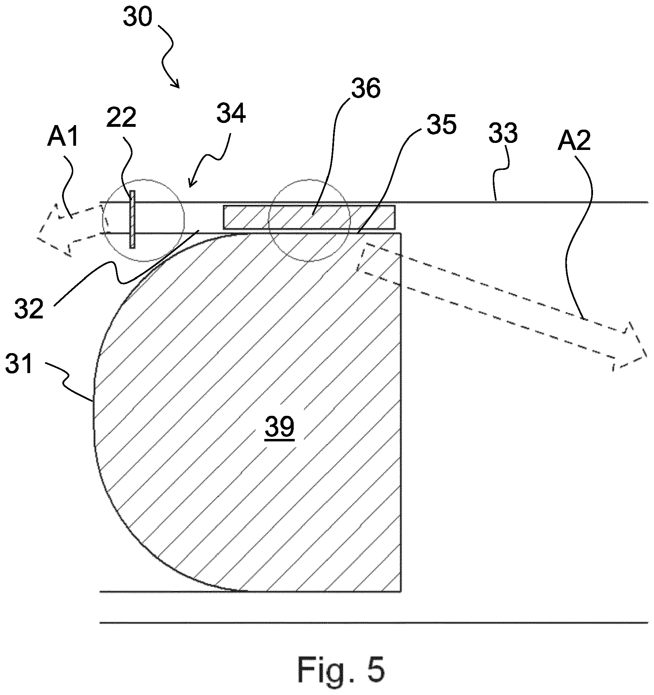

Fig. 5 schematically depicts a section of a tank structure 30 according to an embodiment of the invention. In this embodiment, the tank structure 30 has a cylindrical geometry, without being limited thereto. The tank structure 30 is in some circumstances used for the storage of liquid hydrogen (LH2) under cryogenic conditions and consists of a composite material or laminate such as laminate consisting of carbon fibre reinforced plastic CFRP, in particular when used in the aircraft industry due to the requirement of weight saving. Use of composite materials or laminates is preferred for aviation purposes due to high strength-to- weight ratios. The inner surface 38 of the tank structure 30 can be provided with a liner manufactured from a fibre composite material 10 according to the invention, whereas configurations employing other lining technologies are encompassed as well. Employing the fibre composite material 10 of the invention as a liner in the tank structure 30, in particular on the inner surface 38, the function of ensuring tightness of the tank structure 30 and suppression of out-gassing of the fibre reinforced plastic, in particular carbon fibre reinforced plastic CFRP, is brought by the fibre composite material 10 of the invention itself and does not have to be incorporated in an extra step during manufacturing. Any CTE mismatch of the metal component and the fibre portion is mitigated by the ductility of the metal component used and being in particular indium and applies also at cryogenic temperatures.

The tank structure 30 has a two-part configuration with a first part 31 configured as a dome part comprising a longitudinally protruding skirt portion 32 and a second part 33 configured as a cylinder. The second part 33 overlaps the first part 31 in the skirt portion 32, after introduction of the first part 31 in the direction as indicated by arrow A2 into the second part 33. In the overlap 34 the first part 31 is secured to the second part 33 by the bolt 22 passing through the skirt portion 32. The bolt 22 does not perforate the tank shell 35 since its position is shifted to the skirt portion 32 as indicated by the circular element which has been inserted for information purposes only and is not part of the tank structure 30 according to the invention.

The first part 31 and second part 33 of the tank structure 30 are joint by standard joining methods such as thermosetting adhesive joining or thermoplastic welding thereby forming a bondline 36 in the region where the final tank shell 35 is formed, as indicated by a further circular element which has been inserted for information purposes only and is not part of the tank structure 30 according to the invention. Using only thermosetting adhesive joining or thermoplastic welding can in some instances not fully meet all demands, in particular demands of applications in cryogenic environments such as LH2 storage. The joining by an additional bolt 22 as depicted in Fig. 5 can overcome this shortcoming and provide a secured and fail-safe joining of the first part 31 and the second part 33 of the tank structure 30. In case of unforeseen adhesive failure in the bondline 36, that provides a first load path in the tank structure 30, as indicated by arrow A1, such as a crack 40 formed in the bondline 36, the crack 40 may propagate to a second load path provided by the bolt 22. By employing the invention fibre composite material 10 at least in the bolt passage 21 or adjacent thereto, sealing of a bolt passage 21 can be provided due to the properties of the invention material and prevent or reduce leakage. Furthermore, placing the bolt 22 in the skirt portion 32 allows for improved accessibility of the bolt 22. The two-part configuration of the tank structure also provides advantages in tolerancing adhesive bonding or welding or wet to cured part bonding and hence increases manufacturing efficiency and improves quality of the final tank structure 30, i.e. a tank manufactured therefrom.

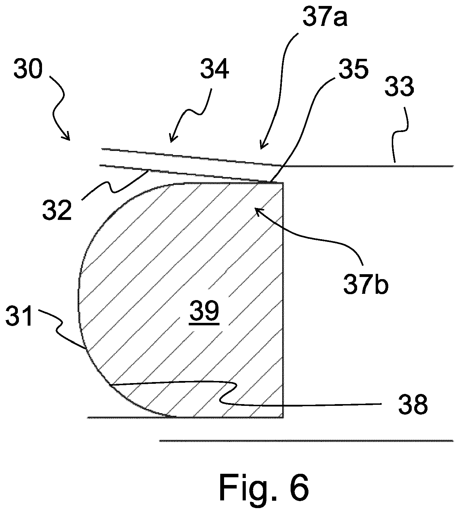

Fig. 6 schematically depict sections of a tank structure 30 according to an embodiment of the invention. Therein the skirt portion 32 and the first tank part 31 are manufactured and cured jointly to achieve a uniform structure in the first tank part 31. Overlapping of the first part 31 and the second part 33 and securing the overlap 34 with a bolt 22 (as shown Fig. 5) provides additional advantages such as providing the bolt 22 as a second load path in the tank structure 30 without perforating the tank shell 35 due to the bolt passage 21 being positioned in the skirt portion 32. This also ensures accessibility of the bolt 22 and bolt passage 21 from two sides at the skirt portion 32, also ensuring that the area of bonding of the first part 31 and the second part 33 of the tank structure 30 in the skirt portion 32 has two-side accessibility, enabling thermoplastic welding and controlled force distribution between the first part 31, also referred to as dome part, and the second part 32, also referred to as cylindric part, of the tank structure 30 in particular in the skirt portion 32. To allow for more efficiency in assembling the first part 31 and second part 33 the overlapping edge regions 37a, b are provided with an angled geometry to facilitate pre-assembly and forming of the overlap 34.

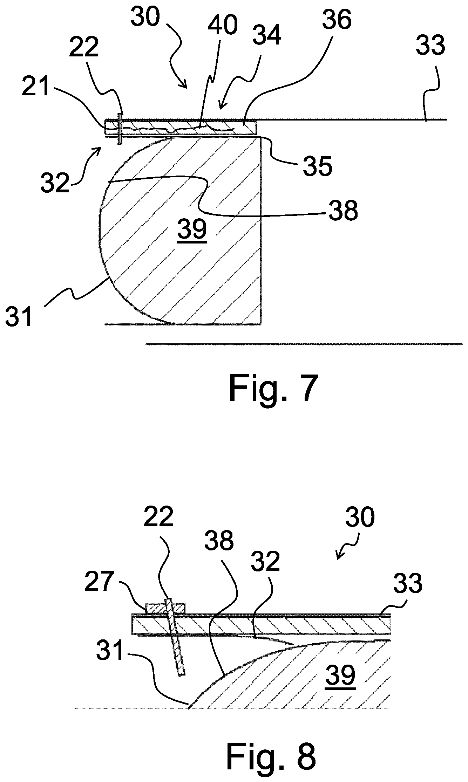

Fig. 7 depicts an embodiment of the tank structure 30 according to the invention. The tank structure 30 has a two-part configuration with a first part 31 and a second part 33 also comprising a skirt portion 32, wherein the first part 31 and the second part 33 overlap. The two parts 31, 33 are joint by an adhesive or thermoplastic welded zone or bondline 36 that provides for a primary load path of the tank structure 30. In the overlap 34 a bolt 22 is placed that has a bolt passage 21 that is placed in the skirt portion 32. Using this bolting technology, perforating the tank shell 35 by the bolt 22 is shifted out to a skirt portion 32, where it does not increase tightness risks of the tank structure 30 during normal operations. In case of unforeseen adhesive failure in the adhesive or thermoplastic welded zone or bondline 36, such as formation of a crack 40. Said crack 40 may propagate to the second load path which is provided by the bolt 22, and may induce gradually increasing leakage only, but prevent fatal failure.

Fig. 8 depicts an embodiment of the tank structure 30 according to the invention. Therein the bolt 22 is inserted in the skirt portion 32 under a certain angle with respect to the tank structure 30 and presses laminates of the first part 31 and second part 32 together, in particular when cracks 40 occur. The bolt 22 is provided with a washer 27 that seals the bolt 22 with respect to the second part 33.

In the above-described embodiments of the invention tank structure 30, the skirt portion 32 can comprise, at least in the area of the bolt 22 or rivet passage, one of a fibre composite material 10 of the invention and a component manufactured therefrom such as in particular a sealing element 26 or a washer 27. The tank structure 30 can also be provided on its entire inner surface 38 or regions thereof with a liner manufactured from the fibre composite material 10 according to the invention, that is provided with a metal component, in particular indium, provided in the side of the liner facing the inner volume 39 of the tank structure 30. The liner can also be provided extending into the overlap 34 of the first part 31 and the second part 33 of the tank structure 30. The fibres 13 in the composite material or component manufactured therefrom provide enhanced stability and ensure stable positioning of the metal component within the material or component even if pressure is applied thereon. The metal component, in particular indium, may flow within the material or component and enhance sealing and tightening properties due to its ductility, even under cryogenic conditions.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 10: fibre composite material
- 11: film
- 12: fibre layer
- 13: fibre
- 14: resin matrix
- 15: carbon fibre reinforced plastic (CFRP) material
- 16: top layer
- 17a, b: region
- 20: resin
- 21: bolt passage
- 22: bolt
- 23a, b: bolt head
- 24: bolt shaft
- 25: inner region
- 26: sealing element
- 27: washer
- 30: tank structure
- 31: first part
- 32: skirt portion
- 33: second part
- 34: overlap
- 35: tank shell
- 36: bondline
- 37: edge region
- 38: inner surface
- 39: inner volume
- 40: crack

## Claims

1. Fibre composite material (10) with at least one fibre layer (12) comprising a metal component having a low melting temperature, high ductility and high density, wherein the fibre layer (12) comprises fibres (13) impregnated with the metal component or having a coating comprising the metal component.

2. Fibre composite material (10) according to claim 1, wherein the metal component is one of indium and metal alloy comprising indium.

3. Fibre composite material (10) according to claim 1 or 2, wherein the fibres (13) are reinforcing fibres, in particular carbon fibres.

4. Fibre composite material (10) according to any one of claims 1 to 3, wherein the at least one fibre layer (12) comprising the metal component is bonded or joint to at least one fibre layer (12) comprising fibre reinforced plastic, in particular carbon fibre reinforced plastic (CFRP) in a layered configuration.

5. Fibre composite material (10) according to any one of claims 1 to 4, wherein the at least one fibre layer (12) has at least one first and one second region (17a, b), with the first region (17a) comprising fibres (13) impregnated or coated with the metal or metal alloy and the second region (17b) comprising fibres impregnated with a polymeric resin matrix (14).

6. Method of manufacturing a fibre composite material (10) according to any one of claims 1 to 5, wherein the method comprises providing at least one fibre layer (12), impregnating or coating the at least one fibre layer (12) at least partially with the metal component, impregnating the at least one fibre layer (12) at least partially with a polymeric resin matrix (14).

7. Method according to claim 6, wherein impregnating with the polymeric resin matrix (14) is carried out before, during or after impregnating with the metal component.

8. Method according to claim 6 or 7, with the at least one fibre layer (12) being configured as a dry fibre semi-finished product having a first surface and a second surface arranged opposite of the first surface and wherein impregnating or coating the dry fibre semi-finished product at least partially with the metal component and impregnating the fibre layer at least partially with a polymeric resin matrix is carried out on one of the first surface, the second surface and both surfaces.

9. Component consisting of or comprising a fibre composite material (10) according to any one of claims 1 to 5, wherein the component is configured as one of a laminate, a sealing element (26), a washer (27) and a liner.

10. Tank structure (30) provided with a component according to claim 9.

11. Tank structure (30) according to claim 10, wherein the component is configured as a sealing element (36) provided in or adjacent to joints or bolt passages (21) provided in the tank structure (30).

12. Tank structure (30) according to claim 10 or 11, wherein the component is configured as a liner provided on an outer and/or inner surface (38) or surface region of the tank structure (30).

13. Tank structure (30) according to any one of claims 10 to 12, wherein the tank structure (30) has a two-part configuration with a first part (31) configured as a dome part comprising a longitudinally protruding skirt portion (32) and a second part (33) configured as a cylinder, with the first part (31) and the second part (33) at least partially overlapping in the skirt portion (32), wherein the first part (31) is secured to the second part (33) by a bolt (22) or rivet passing through the skirt portion (32).

14. Tank structure (30) according to claim 13, wherein the skirt portion (32) comprises, at least in the area of the bolt passage (21) or rivet passage, one of a fibre composite material (10) according to any one of claims 1 to 5 and a component according to claim 9, in particular a sealing element (26) or a washer (27).

15. Tank structure (30) according to any one of claims 10 to 14, wherein the tank structure is configured as a liquid hydrogen (LH2) tank, in particular in an aircraft and/or wherein the tank structure (30) is manufactured from fibre reinforced plastic, in particular carbon fibre reinforced plastic (CFRP).
